# EUROPÄISCHE PATENTSCHRIFT

(11) **EP 0 538 511 B1**
(45) Veröffentlichungstag und Bekanntmachung des Hinweises auf die Patenterteilung: **31.07.1996**
(21) Anmeldenummer: 91118084.2
(22) Anmeldetag: 23.10.1991
(51) Int. Cl.: C05F 17/02

(54) **Komposter**
Compost bin
Récipient de compostage

(30) Priorität: 23.08.1991 DE 9110413 U; 27.09.1991 DE 9112086 U
(43) Veröffentlichungstag der Anmeldung: 28.04.1993
(73) Patentinhaber: M. Schmidt GmbH Recycling-Anlagen-Management, D-83627 Warngau (DE)
(72) Erfinder: Levermann, Martin, W-8336 Malgersdorf (DE)
(74) Vertreter: Patentanwälte Dr. Solf & Zapf

(56) Entgegenhaltungen:
- GB-A- 2 038 304
- NL-A- 8 200 102
- US-A- 4 125 394

## Beschreibung

Die Erfindung betrifft einen Komposter mit vier gleich ausgebildeten Wandteilen und einem Deckel, wobei der Komposter einen etwa rechteckigen Grundriß mit vier ebenen Seitenwandbereichen und Eckbereichen hat.

Behälter mit wenigstens drei, vor allem vier rechtwinklig zueinander angeordneten Wandteilen sind in unterschiedlichsten Ausgestaltungen bekannt, die jeweils von dem speziellen Verwendungszweck abhängen. Solche Behälter können als Transportbehälter oder als Lagerbehälter ausgebildet sein. Während für die erstgenannte Behälterart, nämlich Transportbehälter, besondere Ansprüche an die allseitige Verwindungssteifheit gestellt werden, müssen Lagerbehälter zumeist anderen Anforderungen genügen, insbesondere dann, wenn sie zur Lagerung von Gut im Freien verwendet werden. Komposter stellen eine spezielle Form solcher Lagerbehälter dar. Diese Lagerbehälter zeichnen sich dadurch aus, daß sie keinen Bodenteil aufweisen, weil das in ihnen angesammelte Gut mit Bakterien aus dem Boden in Verbindung stehen soll. Komposter werden deshalb im allgemeinen an einer vorbestimmten Stelle eines Gartengrundstücks aufgestellt, und zwar direkt auf dem Erdreich. Befüllt werden Komposter mit zu kompostierendem Gut von der Oberseite her, also über den geöffneten Deckel. Zur Entnahme des durch Kompostierung entstehenden Humus ist es bekannt, in einem der Wandteile im unteren Bereich ein Klappe oder eine Tür vorzusehen.

Als Komposter werden Behälter verwendet, die mit möglichst wenigen Handgriffen vor Ort aus vorgefertigten Wandteilen zusammengesetzt werden. Zur Montage des Komposters aus den vorgefertigten Wandteilen werden herkömmlicherweise separate Verbindungselemente eingesetzt, insbesondere Verbindungselemente mit Schrauben und Muttern. Der Aufbau derartiger als Komposter verwendeter Behälter gestaltet sich deshalb relativ aufwendig, wobei zudem zu berücksichtigen ist, daß der Aufbau zumeist von Laien vorgenommen wird. Zudem läßt die Stabilität herkömmlicher Verbindungen zu wünschen übrig, vor allem mit Bezug auf die erforderliche Formstabilität und Verwindungssteifheit des Behälters. Ein weiterer Nachteil herkömmlicher Komposter besteht darin, daß zur Entnahme des beim Kompostierungsvorgangs entstehenden Humus zwar entsprechende Klappen oder Türen vorgesehen sind, daß diese Teile jedoch keinen einfachen Zugang zum Innenraum des Komposters erlauben, insbesondere keinen Zugang, der ein vollständiges Ausräumen ohne weiteres gewährleistet. Aber auch das Befüllen herkömmlicher Komposter gestaltet sich nicht problemlos. Zu diesem Zweck ist der Behälterdeckel üblicherweise mit einem Scharnier angeschlagen, was es erforderlich macht, daß der Deckel im geöffneten Zustand gehalten werden muß. Wird er nicht gehalten, sondern vollständig aufgeklappt, besteht die Gefahr, daß seine Scharnierlagerung ausbricht. Ein weiteres Problem von über Scharniere angeschlagenen Komposterdeckeln besteht darin, daß Regenwasser in das Komposterinnere eindringt, und dort die Feuchtigkeit in einem unerwünschten Maße erhöht.

In der US 4,125,394 ist ein Komposter beschrieben, der einen im wesentlichen kreisförmigen bzw. polygonalen Grundriß hat und aus einer großen Anzahl von Seitenwandteilen zusammengebaut ist. Die einzelnen Wandteile sind entweder ebenflächig ausgebildet, wobei die Krümmung des Komposters durch eine Abwinkelung an den Verbindungsstellen der einzelnen Wandteile erfolgt, oder bogenförmig oder um zwei vertikale Kanten abgewinkelt ausgebildet. Diese abgewinkelten Wandteile sind jedoch auf Grund der großen Anzahl, die zum Zusammenbauen dieses Komposters verwendet werden, nur geringfügig abgewinkelt, so daß die dabei gebildeten Kanten kaum zur Erhöhung der Stabilität beitragen. Ferner ist das Zusammenbauen dieses Komposters aufwending, denn es müssen eine Vielzahl von Wandteilen zusammengefügt werden.

Weiterhin ist in der GB 2 038 304 A ein Komposter beschrieben, bei dem wiederum eine Vielzahl von Wandteilen zu einem Kompostbehälter zusammengesetzt werden, die auf ein Fundamentelement aufgesetzt und daran befestigt werden. Die einzelnen Wandteile sind über Verbindungselemente an ihren vertikalen Seitenkanten verschiebbar miteinander verbunden. Das Zusammenbauen dieses Behälters ist aufwendig, da eine Vielzahl von Wandteilen zusammengeschoben werden muß, die einen relativ instabilen Torus bilden, der durch das Fundamentelement in seiner Form gehalten wird.

In NL 8200102 sind Behälter beschrieben, die aus gebogenen Wandteilen zusammengesteckt und im Querschnitt kreisförmig sind. Die Wandteilen sind an ihren vertikalen Seitenkanten mit Verbindungselementen zum gegeseitigen Verbinden versehen. Im gebogenen Seitenwandbereich sind zusätzliche, im Querschnitt V-förmige Verstärkungssicken ausgebildet, die den Wandteilen eine gewisse Stabilität verleihen sollen. Ohne zusätzliche Verstärkungssicken würde dieser Behälter auf Grund seiner Raumform nur eine sehr geringe Eigenstabilität aufweisen.

Die Aufgabe der vorliegenden Erfindung besteht darin, einen Behälter der eingangs genannten Art besonders einfach montierbar sowie stabil, vor allem zumindest im wesentlichen verwindungssteif auszubilden. Außerdem soll ein Behälter geschaffen werden, der im Baukastenprinzip aus wenigen unterschiedlichen Teilen gefertigt werden kann.

Gelöst wird diese Aufgabe durch die kennzeichnenden Merkmale des Anspruchs 1 bzw. des Anspruchs 2. Vorteilhafte Weiterbildungen der Erfindung sind in den abhängigen Ansprüchen angegeben.

Die Erfindung schafft also gemäß Anspruch 1 einen Komposter, dessen Verbindungszonen sich außerhalb der vertikalen Behälterecken innerhalb der Behälterseitenwände befinden, wodurch aus den gewinkelten Wandteilen ein stabiles und im wesentlichen vewindungssteifes Gebilde entsteht.

Ferner schafft die Erfindung gemäß Anspruch 2 einen Komposter, dessen Verbindungszonen sich in den abgeschrägt ausgebildeten vertikalen Behälterecken befinden, wodurch aus dem im Bereich ihrer Seitenkanten gewinkelt bzw. umgebogen verlaufenden Wandteilen ein stabiles und im wesentlichen verwindungssteifes Gebilde entsteht.

Den vorstehend genannten beiden Varianten der Erfindung liegt also das gemeinsame technische Prinzip zugrunde, die Verbindungszonen für die Behälter-Wandteile außerhalb von vertikalen Behälterkanten innerhalb von Behälterflächenbereichen anzuordnen, was im Vergleich zu einer Anordnung der Verbindungszonen direkt in Behälterkanten oder Behälterecken den Vorteil hat, daß ein stabiler Behälteraufbau erreicht wird.

Die Erfindung schafft ferner einen Komposter, dessen Wandteilverbindungselemente einstückig mit den Wandteilen ausgebildet sind. Hierdurch wird die Anzahl der Einzelteile, aus denen der Behälter zusammengesetzt werden muß, drastisch reduziert. Im Falle des erfindungsgemäßen Behälters ist die Anzahl unterschiedlicher Bauelemente grundsätzlich auf zwei beschränkt, nämlich auf identisch ausgebildete Wandteile mit integrierten Verbindungselementen und dem Deckel. Ein Vorteil der geringen unterschiedlichen Einzelteileanzahl erlaubt eine herstellungs- und vertriebsseitig einfache Bevorratung der Behältereinzelteile, wobei die Wandteile ebenso untereinander stapelbar sind, wie die Deckelteile.

Eine besonders einfache Montage des Behälters aus den gleich ausgebildeten Wandteilen wird dadurch gewährleistet, daß die einstückig mit den Wandteilen ausgebildeten Verbindungselemente ein vertikales Zusammenschieben der Wandteile zulassen. Diese Art der Montage erleichtert auch dem Laien vor Ort, nämlich im Garten, ein problemloses Zusammensetzen des als Komposter eingesetzten Behälters ohne zusätzliche Ausricht- und Schraubarbeiten, die bei herkömmlichen Kompostern erforderlich sind.

Besonders vorteilhaft beim Einsatz des erfindungsgemäßen Behälters als Komposter ist es, daß die Wandteile auch nach der bestimmungsgemäßen Montage zum Behälter vertikal verschiebbar bleiben. Damit kann die Entladung von Humus in äußerst einfacher Weise dadurch bewerkstelligt werden, daß eines der Wandteile um den für die Entladung erforderlichen Betrag nach oben geschoben wird. Vorteilhaft ist es dabei weiterhin, daß auf diese Weise der Humus, der sich im unteren Teil des Komposters gebildet hat, über die volle Breite des hochgezogenen Wandteils zugänglich ist. Dieses ausgewählte Wandteil ist zudem vorzugsweise mit einer Griffleiste ausgebildet.

Grundsätzlich eignet sich der erfindungsgemäße Behälter aber auch als Universallagerbehälter, wobei es gegebenenfalls lediglich erforderlich ist, ein Bodenteil zu montieren. Zu diesem Zweck sind vorteilhafterweise an den identisch ausgebildeten Wandteilen Befestigungseinrichtungen, beispielsweise in Gestalt von Schraubenlöchern ausgebildet.

Die beiden Seitenkanten jedes Wandteils sind erfindungsgemäß unterschiedlich ausgebildet, um die Universalität der Wandteile zu gewährleisten, nämlich ihre Kombinierbarkeit mit identischen Wandteilen zu dem Behälter. Zu diesem Zweck bestehen die einteilig mit den Wandteilen ausgebildeten Verbindungselemente aus unterschiedlich ausgebildeten, komplementär zusammenwirkenden Kopplungsorganen, wobei eine Kopplungsorgansorte an einer Wandteilseitenkante und die andere Kopplungsorgansorte an der anderen Wandteilseitenkante ausgebildet ist.

Ein spezielles Problem von Kompostern besteht darin, daß diese naturgemäß auf mehr oder weniger unebenem Gartenboden aufgestellt werden, weshalb eine gewisse Flexibilität des Komposters bzw. ein gewisses Spiel der Wandteile in vertikaler und horizontaler Richtung erwünscht ist, wobei jedoch die z.B. rechten Winkel des Komposters im wesentlichen erhalten bleiben sollen, und zwar nicht nur aus Stabilitätsgründen, sondern auch, um eine freie Verschiebbarkeit des für Humusentladung vorgesehenen Wandteils in vertikaler Richtung zu gewährleisten. Zu diesem Zweck sieht die Erfindung speziell ausgebildete Verbindungselement-Kopplungsorgane vor. Bevorzugt ist eine Ausbildung des einen Kopplungsorgans als vertikal verlaufender Stab, vor allem Rundstab bzw. Flachstab, und eine Ausbildung des anderen Kopplungsorgans als Stabführungsteil. Damit greifen die Kopplungsorgane in Art einer Zapfen-Klauenkupplung ineinander. Die vertikale Verschiebbarkeit der Wandteile gegeneinander, auch bei nicht ebener Aufstellung des Behälters bzw. Komposters, wird dadurch gewährleistet, daß das Stabführungsteil den Stabteil nicht vollständig umschließt, und daß in seitlicher Richtung ein Spiel der Kopplungsorgane zugelassen ist, und zwar bei Aufrechterhaltung einer hinreichenden Überallesstabilität des Behälters bzw. Komposters.

Zur Gewährleistung einer verkantungsfreien Verschiebbarkeit in vertikaler Richtung ist das Stabführungsteil der Kopplungsorgane lediglich über eine begrenzte Länge ausgebildet, insbesondere nicht über die gesamte Länge des stabförmigen Kopplungsorgans.

Zur Stabilität des erfindungsgemäßen Behälters tragen Verstärkungsrippen bei, die wahlweise horizontal und/oder vertikal verlaufend vorgesehen sind. Bevorzugt sind innenseitig vertikal verlaufende Stützrippen, während außenseitig die Stützrippen, vorzugsweise zu Paaren zusammengefaßt über die gesamte Breite jedes Wandteils verlaufen und zur Erhöhung der Stabilität der Kopplungsorgane an den Wandteilkanten mit diesen verbunden sind.

Besonders vorteilhaft ist eine erfindungsgemäß vorgesehene verschiebbare Lagerung des Deckels auf dem Behälter, wodurch den Bedürfnissen bei der Kompostierpraxis entsprochen wird, da ein Herabfallen des Deckels ebenso wie ein Abstützen des Deckels, wie es bei herkömmlichen Kompostern erforderlich ist, entfällt. Vorzugsweise ist der Komposterdeckel zweiteilig ausgebildet, wobei ein Teil fest mit den Wandteilen verbunden ist, während der andere Teil verschiebbar gegenüber dem ersten Teil an diesem sowie an zwei aneinander gegenüberliegenden Wandteilen gelagert ist. Vorteilhaft für Kompostierzwecke ist es außerdem, daß der Deckel mit einem umlaufend überstehenden Rand versehen ist, wodurch ein unerwünschtes Eindringen von Regenwasser in den Komposter verhindert wird. Um eine unnötige Belastung des Deckels durch Regenwasser und/oder Schnee zu vermeiden, ist der Deckel vorzugsweise dachartig abgeschrägt ausgebildet.

Vorteilhaft ist auch sowohl für die Montage wie für eine einfache Bedienbarkeit eine zweiteilige Ausbildung des Deckels als Schwenkdeckel mit einer lösbaren Schwenkverbindung der beiden Deckelteile gemäß den Ansprüchen 32 bis 35.

Die mit dem erfindungsgemäßen Behälter erreichbaren Vorteile lassen sich also wie folgt zusammenfassen. Der Behälter ist auch von Laien ohne den Einsatz von Werkzeugen einfach montierbar. Der Behälter ist weitgehend verwindungssteif, jedoch in beschränktem Maße anpassungsfähig an Unebenheiten des Aufstellorts. Die integral mit den Wandteilen ausgebildeten Verbindungselemente erlauben auch bei unebener Aufstellung des Behälters jederzeit eine vertikale Verschieblichkeit der Wandteile. Schließlich gewährleistet der Deckel des erfindungsgemäßen Behälters einen dichten Verschluß zugunsten des im Behälter eingelagerten Guts.

Weitere durch die Erfindung erzielbare Vorteile gehen aus nachfolgend beschriebenen bevorzugten Ausführungsbeispielen der Erfindung hervor, die in der Zeichnung dargestellt sind; in dieser zeigen:
- Fig. 1: eine perspektivische Ansicht einer ersten Ausführungsform des vollständig montierten erfindungsgemäßen Behälters,
- Fig. 2: den Behälter in Fig. 1 bei abgenommenem und zerlegten Deckel sowie einem hochgezogenen Wandteil,
- Fig. 3: eine Detailansicht eines der beiden Verbindungselement-Kopplungsorgane für aneinandergrenzende Wandteile des Behälters in Fig. 1,
- Fig. 4: eine Schnittansicht der beiden ineinander gesetzten Verbindungselement-Kopplungsorgane aneinander grenzender Wandteile des Behälters in Fig. 1,
- Fig. 5: eine perspektivische Ansicht einer zweiten Ausführungsform des vollständig montierten erfindungsgemäßen Behälters,
- Fig. 6: den Behälter in Fig. 5 bei abgenommenem und zerlegtem Schwenkdeckel sowie einem hochgezogenen Wandteil,
- Fig. 7: eine Detailansicht eines der beiden Verbindungselement-Kopplungsorgane für aneinandergrenzende Wandteile des Behälters und
- Fig. 8: eine Draufsicht auf die beiden ineinander gesetzten Verbindungselement-Kopplungsorgane aneinandergrenzender Wandteile des Behälters in Fig. 5.

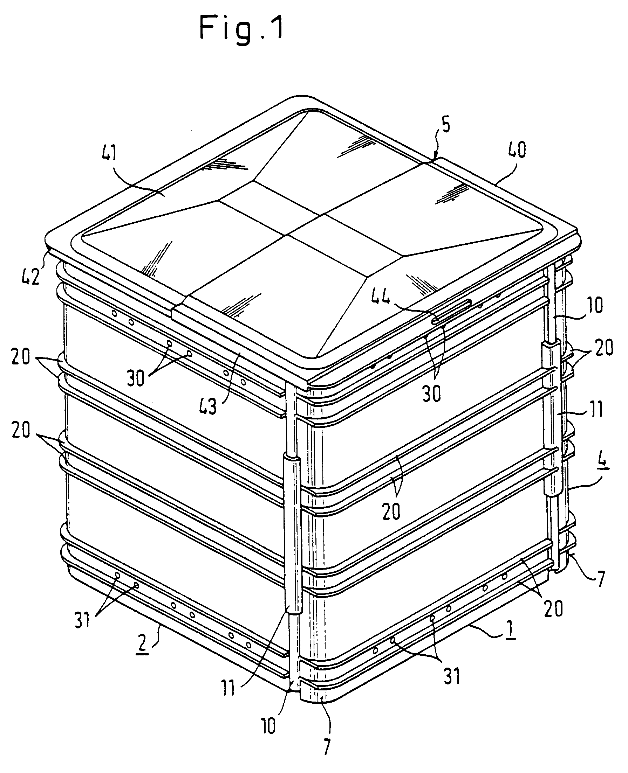

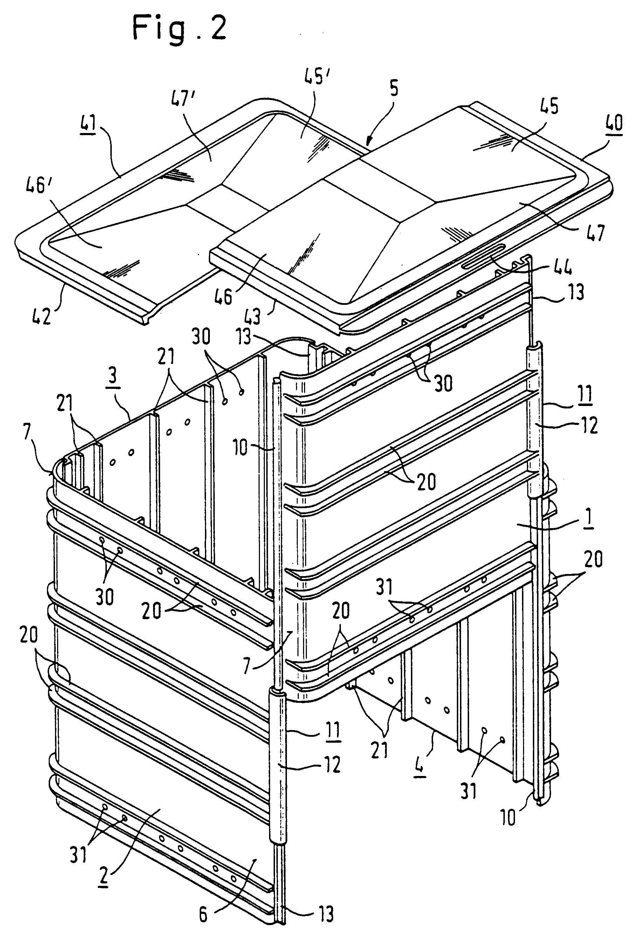

Der in den Fig. 1 und 2 gezeigte Behälter ist als Komposter ausgebildet und besteht aus vier rechtwinklig zueinander angeordneten Wandteilen 1-4, wie aus Fig. 2 hervorgeht, sowie aus einem Deckel 5. Die Wandteile 1-4 sind als identische Bauteile ausgebildet, von rechteckiger Gestalt und im wesentlichen eben verlaufend.

Am Beispiel des Wandteils 2 von Fig. 2 wird deutlich, daß jedes Wandteil einen ebenen Seitenkantenbereich 6 sowie einen diesem gegenüberliegenden gekrümmten Seitenkantenbereich 7 umfaßt. Die gekrümmte Ausbildung des Kantenbereichs 7 erfolgt aus optischen Gründen (abgerundete vertikale Kantenbereiche des Behälters) vor allem jedoch aus Stabilitätsgründen. Ein wesentlicher Aspekt der Erfindung besteht darin, daß die Verbindungselemente, über welche die identischen Wandteile 1 bis 4 zum Behälter zusammengesetzt werden, außerhalb der vertikalen Behälter-Kantenbereiche zu liegen kommen, also innerhalb der Behälterseitenwände.

Bevorzugt bestehen die Wandteile aus einem witterungsbeständigen Kunststoff, und die Verbindungselemente sind einstückig als Bestandteil des selben Spritzgußteils hergestellt wie die Wandteile 1 bis 4. Um die identischen Wandteile 1 bis 4 bestimmungsgemäß zu einem rechteckigen Behälter zusammenbauen zu können, ist es erforderlich, daß jede der beiden Seitenkanten eines Wandteils unterschiedlich ausgebildete Verbindungsorgane umfaßt, die bei zusammengesetztem Behälter komplementär zusammenwirken. Die Verbindungs- oder Kopplungsorgane sind erfindungsgemäß desweiteren derart ausgebildet, daß ein Zusammenbau des Behälters durch ein vertikales Zusammenschieben der Wandteile erfolgt.

Gemäß den Fig. 1 bis 4 sind die an den Seitenkanten der Wandteile 1 bis 4 ausgebildeten Kopplungsorgane als Zapfen-Klauenanordnung ausgebildet. Diese besteht aus einem integral mit der einen Seitenkante verbundenen Stab 10 und einem an der anderen Seitenkante des Wandteils integral ausgebildeten Stabführungsteil 11. Der Stab 10 wird durch das Stabführungsteil 11 buchsenartig umschlossen, wobei es wesentlich ist, daß das Stabführungsteil 11 keine geschlossene und durchgehende Buchse ist, sondern ein Organ, das aus einer zentral an der entsprechenden Seitenkante ausgebildeten Teilzylinder 12 und einem diesem gegenüberliegenden, im wesentlichen planen, und von der Seitenkante zurückgesetzten Stützabschnitt 13 besteht. Während der teilzylindrische Abschnitt 12 zentral an der entsprechenden Wandteilseitenkante ausgebildet ist, befindet sich der mit diesem Abschnitt 12 zusammenwirkende Stützabschnitt 13 außenliegend zu dem Abschnitt 2, also am oberen und unteren Ende der entsprechenden Wandteilseitenkante. Mit anderen Worten sind die Abschnitte 12 und 13 in axialer Richtung versetzt zueinander derart angeordnet, daß sich die Abschnitte 12 und 13 an keiner Stelle direkt gegenüberstehen, was zum einen den Vorteil einer Materialersparnis und zum anderen den Vorteil einer verringerten Reibung in der Führung des Stabs 11 erbringt, wodurch die Wandteile 1 bis 4 mit relativ geringem Kraftaufwand relativ zueinander verschieblich sind.

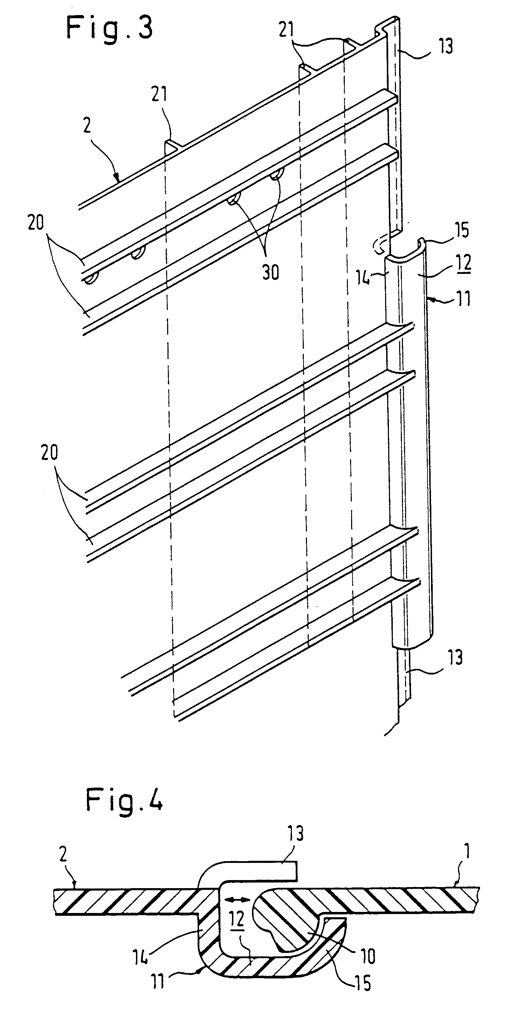

Fig. 4 zeigt eine Aufsicht auf einen Eckbereich des montierten Behälters. Dabei wird deutlich, daß die Stabführungsabschnitte 12 und 13, die das Stabführungsteil 11 der beiden Kopplungsorgane darstellen, zusammen in Aufsicht in etwa U-förmig ausgebildet sind, wobei die Basis 14 dieses in Aufsicht U-förmigen Gebildes mit der entsprechenden Wandteilseitenkante verbunden ist. In das U-förmige Gebilde mit den Schenkeln 12 und 13 greift der Stab 10 des benachbarten Wandteils ein, der dort entlang der Wandteilseitenkante ausgebildet ist, und im wesentlichen einen runden Querschnitt aufweist. Gehaltert wird der Stab 10 in dem in Aufsicht U-förmigen Gebilde 12 und 13 des Stabführungsteils 11 durch das umgebogene verlängerte Ende 15 des Schenkels 12, der sich bei in das U-förmige Gebilde 12, 13 eingesetztem Stab 10 zur Außenfläche des entsprechenden benachbarten Wandteils erstreckt. In Richtung zum Behälterinneren hin ist der Stab 10 geführt durch den Schenkel bzw. den Stützabschnitt 13, und zwar relativ spielfrei. Erreicht wird dies dadurch, daß die lichte Weite der beiden U-Schenkel 12 und 13 in etwa der Stärke des Stabs 11 in dieser Richtung entspricht. Um in einem gewissen Maße Versetzungsbewegungen der benachbarten Wandteile zuzulassen, ohne daß die Rechtwinkligkeit des Behälters gefährdet wird, ist ein Spiel vorgesehen zwischen der Basis 14 des in Aufsicht U-förmigen Gebildes 12, 13 und der gegenüberliegenden Stirnfläche des Stabs 10. Außerdem erlaubt dieses Spiel der beiden komplementär zusammenwirkenden Kopplungsorgane des Verbindungselements den Zusammenbau des Behälters, bei dem eine gewisse Verkantung der Wandteile 1 bis 4 zueinander während des Ineinanderschiebens der Wandteile nicht vollständig vermieden werden kann. Schließlich erlaubt dieses Spiel eine Anpassung des Behälters an einen unebenen Stellboden, wie er im Gartenbereich üblich ist, sowie die jederzeitliche Verschiebbarkeit der Wandteile zueinander.

Beim Einsatz des Behälters als Komposter erübrigt sich durch die erfindungsgemäße verschiebliche Ausbildung der Wandteile zueinander das Anbringen einer zusätzlichen Entnahmeöffnung sowie Entnahmeklappe oder Entnahmetür an einer der Wandteile, da einer dieser Wandteile, der bevorzugt mit einer Griffleiste versehen ist, zum Zwecke der Entladung von Humus problemlos nach oben geschoben werden kann, wie in Fig. 2 anhand des Wandteils 1 dargestellt, der für die Gutsentnahme etwa bis zur Hälfte hochgeschoben ist.

Bei dem in den Fig. 1 bis 3 dargestellten Behälter ist das stabförmige Kopplungselement 10 an der umgebogenen Seitenkante 7 eines jeden Wandteils 1 bis 4 ausgebildet.

Zur Erhöhung der Stabilität des erfindungsgemäßen Behälters sind Stützrippen 20 und 21 vorgesehen, von denen die Stützrippen 20 außen und die Stützrippen 21 innen integral mit dem jeweiligen Wandteil ausgebildet sind. Die innengelegenen Stützrippen 21 verlaufen in vertikaler Richtung und weisen zueinander einen im wesentlichen gleichen Abstand auf. Die außengelegenen Stützrippen 20 sind paarweise zusammengefaßt und verlaufen horizontal über die gesamte Breite jedes Wandteils 1 bis 4. Wie aus Fig. 3 besonders deutlich hervorgeht, erstrecken sich die seitlichen Stützrippen 20 bis zu dem zentralen Kopplungsorgan 12 des Verbindungselements, und die Stützrippen 20 sind mit dem Organ 12 fest verbunden, um dessen Stabilität zu erhöhen. Zudem bilden die Stützrippen 20 einen Stoßschutz für die Organe 12, weil sie dieselbe Erstreckungstiefe aufweisen wie das Organ 12.

An den Ober- und Unterkanten jedes Wandteils 1 bis 4 sind zwischen den dort paarweise vorgesehenen außengelgenen Stützrippen 20 zudem Bohrungen 30 und 31 ausgebildet, die es erlauben, mehrere Behälter des dargestellten Typs miteinander zu verbinden. Alternativ hierzu eignen sich die Bohrungen 30 und 31 zur Befestigung eines festen Bodenteils und/oder Zwischenbodens (nicht dargestellt) oder/und eines festen Deckelteils (ebenfalls nicht dargestellt).

Der Deckel 5 des Behälters ist zweiteilig ausgebildet. Der Deckelteil 41 weist einen U-förmig umlaufenden, nach unten vorstehenden Steg 42 auf, der so weit nach innen gesetzt ist, daß der Deckel 41 im Preßsitz auf dem Oberkantenbereich des Behälters aufsteckbar ist. Der andere Deckelteil 40, im dargestellten Beispiel eine Deckelhälfte, ist als Schiebeteil ausgebildet. Zu diesem Zweck weist der Deckelteil 40 zwei seitliche Stege 43 auf, die so weit voneinander beabstandet sind, daß der Deckelteil 40 mit Bezug auf den zweiten Deckelteil 41 verschieblich ist. Außerdem weist der verschiebliche Deckelteil 40 sich nach innen an die Stege 43 anschließende horizontale Gleitflächen auf, die auf entsprechenden Gleitflächen des anderen Deckelteils aufzulaufen vermögen. Schließlich weist der Schiebedeckelteil 40 einen Handgriff 44 auf.

Die beiden Deckelteile 40 und 41 sind als Profilteile mit Dachschrägen 45, 46 und 47 ausgebildet, um einen Ablauf von Regenwasser sowie ein Abrutschen von Schnee zu gewährleisten.

Wie aus Fig. 1 hervorgeht, überspannen die beiden Deckelteile 40 und 41 mit ihren Außenrändern die Oberkanten der Wandteile 1 bis 4 weitläufig, so daß ein Eindringen von Regenwasser in den Komposter zuverlässig verhindert wird.

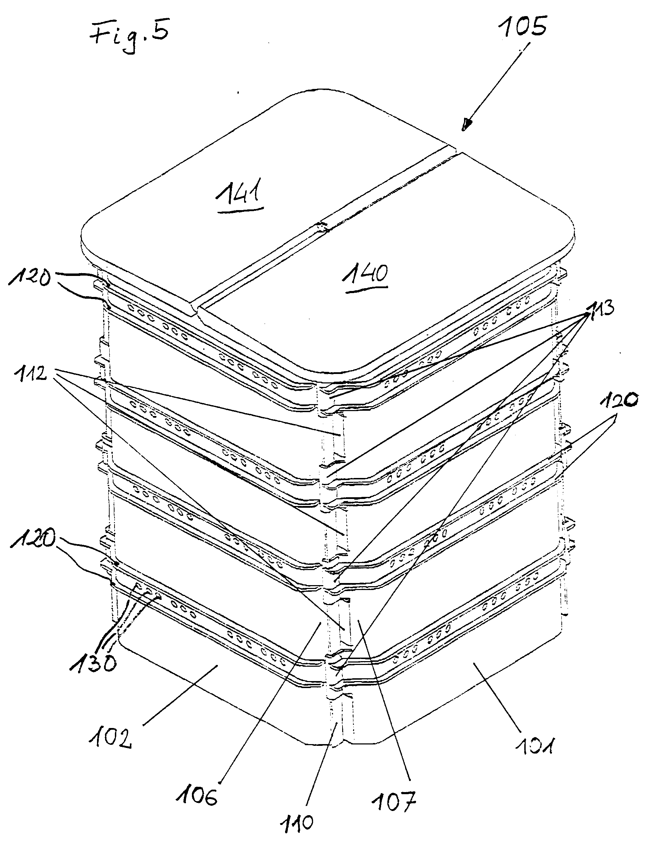

Eine weitere Ausführungsform des erfindungsgemäßen Behälters ist in den Fig. 5 bis 8 dargestellt, wobei gleiche Bauteile mit um 100 erhöhten Bezugszeichen bezeichnet sind.

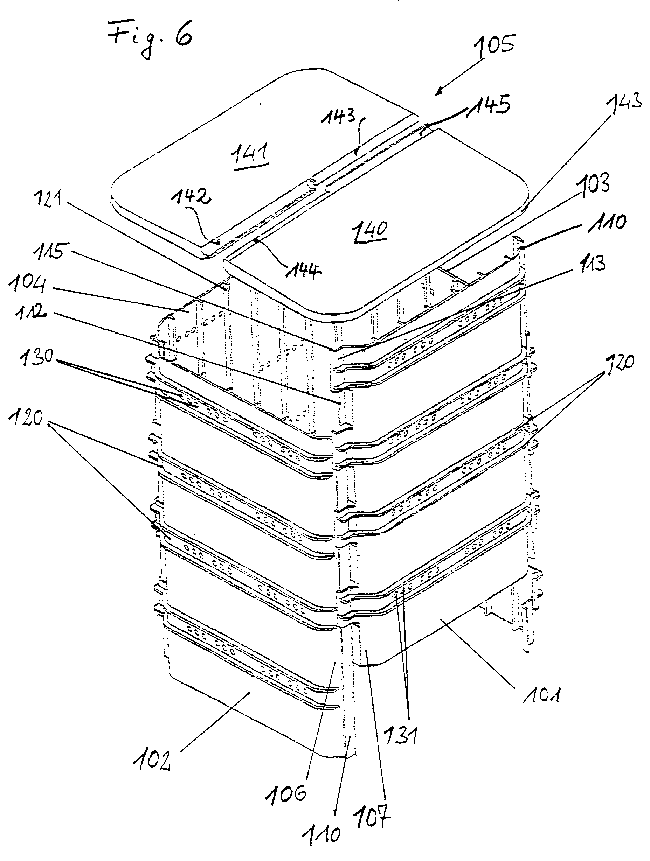

Der in den Fig. 5 und 6 gezeigte Behälter ist ebenfalls als Komposter ausgebildet und besteht aus vier rechtwinklig zueinander angeordneten Wandteilen 101-104, wie aus Fig. 6 hervorgeht, sowie aus einem Deckel 105. Die Wandteile 101-104 sind als identische Bauteile ausgebildet, von rechteckiger Gestalt und bis auf die Seitenkantenbereiche im wesentlichen eben verlaufend.

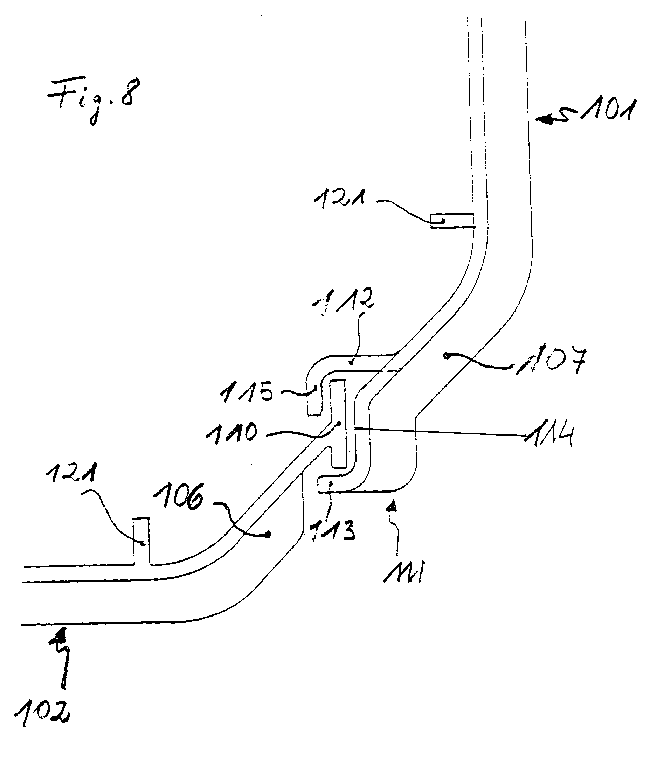

Am Beispiel der Wandteile 101 und 102 von Fig. 8 wird deutlich, daß die beiden Seitenkantenbereiche 106 und 107 jedes Wandteils nach innen abgewinkelt verlaufen, wodurch abgeschrägte vertikale Behälterecken entstehen. Im Falle eines rechteckigen Behälters verlaufen die ebenen Wandteilflächen und die abgewinkelten Seitenkantenbereiche der Wandteile unter einem horizontalen Winkel von etwa 139° zueinander. Ein wesentlicher Aspekt der Erfindung besteht darin, daß die an den freien Enden der nach innen gebogenen Seitenkantenabschnitte 106 und 107 ausgebildeten Verbindungselemente, über welche die identischen Wandteile 101-104 zum Behälter zusammengesetzt werden, innerhalb der abgeschrägten vertikalen Behältereckenbereiche zu liegen kommen.

Bevorzugt bestehen die Wandteile aus einem witterungsbeständigen Kunststoff, und die Verbindungselemente sind als Bestandteil desselben Spritzgußteils hergestellt wie die Wandteile 101-104. Um die identischen Wandteile 101-104 bestimmungsgemäß zu einem rechteckigen Behälter zusammenbauen zu können, ist es erforderlich, daß jede der beiden Seitenkanten eines Wandteils unterschiedlich ausgebildete Verbindungsorgane umfaßt, die bei zusammengesetztem Behälter komplementär zusammenwirken. Die Verbindungs- oder Kopplungsorgane sind erfindungsgemäß desweiteren derart ausgebildet, daß ein Zusammenbau des Behälters durch ein vertikales Zusammenschieben der Wandteile erfolgt.

Gemäß den Fig. 5 bis 8 sind die an den Seitenkanten der Wandteile 101-104 ausgebildeten Kopplungsorgane als Zapfen-Klauenanordnung ausgebildet. Diese besteht aus einem integral mit der einen Seitenkante verbundenen Stab 110 und einem an der anderen Seitenkante des Wandteils integral ausgebildeten Stabführungsteil 111. Der Stab 110 wird durch das Stabführungsteil 111 buchsenartig umschlossen, wobei es wesentlich ist, daß das Stabführungsteil 111 keine geschlossene und durchgehende Buchse ist, sondern ein Organ, das aus einer zentral an der entsprechenden Seitenkante ausgebildeten offenen im Querschnitt L-förmigen Profil 112 und einem diesem gegenüberliegenden offenen ebenfalls im Querschnitt L-förmigen und von der Seitenkante zurückgesetzen Profil 113 besteht. Während das Profil 112 zentral an der entsprechenden Wandteilseitenkante ausgebildet ist, befindet sich das mit diesem Abschnitt 112 zusammenwirkende Stützprofil 113 außenliegend zu dem Profil 112, also am oberen und unteren Ende der entsprechenden Wandteilseitenkante. Mit anderen Worten sind die Profile 112 und 113 in axialer Richtung versetzt zueinander derart angeordnet, daß sich sie an keiner Stelle direkt gegenüberstehen, was zum einen den Vorteil einer Materialersparnis und zum anderen den Vorteil einer verringerten Reibung in der Führung des Stabs 111 erbringt, wodurch die Wandteile 101-104 mit relativ geringem Kraftaufwand relativ zueinander verschieblich sind.

Aus der in Fig. 8 gezeigten Aufsicht auf einen Eckbereich des montierten Behälters wird deutlich, daß die Stabführungsabschnitte 112 und 113, die das Stabführungsteil 111 der beiden Kopplungsorgane darstellen, zusammen in Aufsicht in etwa U-förmig ausgebildet sind, wobei die Basis 114 dieses in Aufsicht U-förmigen Gebildes mit dem freien Ende des entsprechenden Wandteilseitenkantenabschnitts 107 (hier des Wandteils 101) verbunden ist. In das U-förmige Gebilde mit den Schenkeln 112 und 113 greift der Flachstab 110 des benachbarten Wandteils 102 ein, der dort entlang des freien Endes des Wandteilseitenkantenabschnitts 106 gebildet ist, und im wesentlichen einen rechten Querschnitt aufweist. Gehaltert wird der Stab 110 in dem in Aufsicht U-förmigen Gebilde 112 und 113 des Stabführungsteils 111 durch das umgebogene verlängerte Ende 115 des Schenkels 112, der sich bei in das U-förmige Gebilde 112, 113 eingesetztem Stab 110 zur Innenfläche des entsprechenden benachbarten Wandteils 102 erstreckt. In Richtung zur Behälteraußenseite hin ist der Stab 110 geführt durch den Schenkel bzw. den Stützabschnitt 113, und zwar mit Spiel. Erreicht wird dies dadurch, daß die lichte Weite der beiden U-Schenkel 112 und 113 etwas größer als die Stärke des Stabs 111 in dieser Richtung ist. Um in einem gewissen Maße Versetzungsbewegungen der benachbarten Wandteile zuzulassen, ohne daß die Rechtwinkligkeit des Behälters gefährdet wird, ist ein etwas größeres Spiel vorgesehen zwischen der Basis 114 des in Aufsicht U-förmigen Gebildes 112, 113 und der gegenüberliegenden Stirnfläche des Stabs 110. Außerdem erlaubt dieses Spiel der beiden komplementär zusammenwirkenden Verbindungselement-Kopplungsorgane einen problemlosen Zusammenbau des Behälters, bei dem eine gewisse Verkantung der Wandteile 101-104 zueinander während des Ineinanderschiebens der Wandteile nicht vollständig vermieden werden kann. Schließlich erlaubt dieses Spiel eine Anpassung des Behälters an einen unebenen Stellboden, wie er im Gartenbereich üblich ist, sowie die jederzeitliche Verschiebbarkeit der Wandteile zueinander.

Beim Einsatz des Behälters als Komposter erübrigt sich durch die erfindungsgemäße verschiebliche Ausbildung der Wandteile zueinander das Anbringen einer zusätzlichen Entnahmeöffnung sowie Entnahmeklappe oder Entnahmetür an einer der Wandteile, da einer dieser Wandteile, der bevorzugt mit einer Griffleiste versehen ist, zum Zwecke der Entladung von Humus problemlos nach oben geschoben werden kann, wie in Fig. 6 anhand des Wandteils 101 dargestellt, der für die Gutsentnahme etwa bis zur Hälfte hochgeschoben ist.

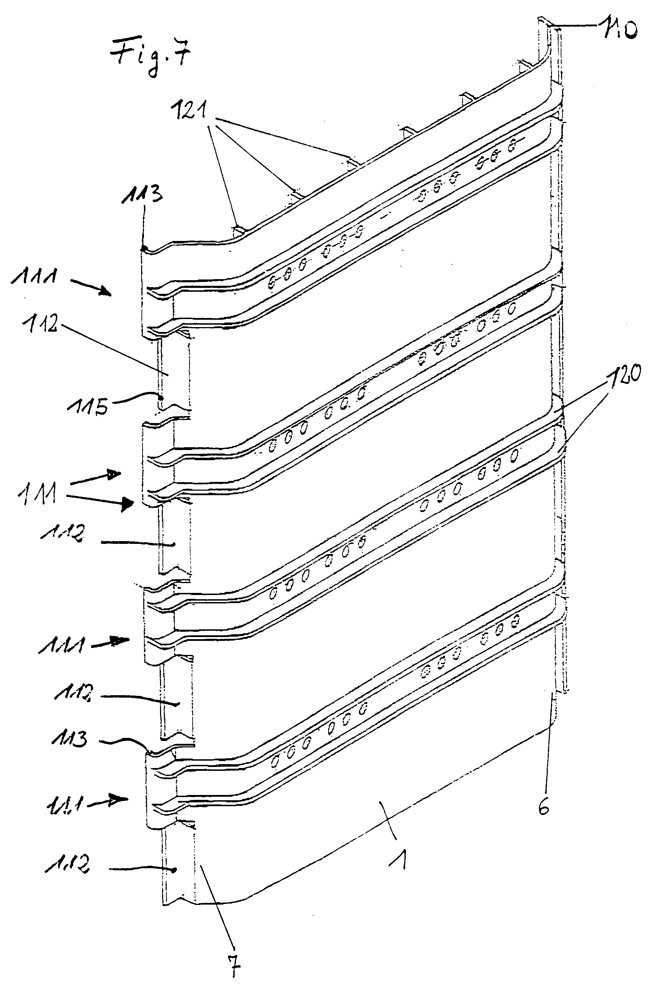

Zur Erhöhung der Stabilität des erfindungsgemäßen Behälters sind Stützrippen 120 und 121 vorgesehen, von denen die Stützrippen 120 außen und die Stützrippen 121 innen integral mit dem jeweiligen Wandteil ausgebildet sind. Die innengelegenen Stützrippen 121 verlaufen in vertikaler Richtung und weisen zueinander einen im wesentlichen gleichen Abstand auf. Die außengelegenen Stützrippen 120 sind paarweise zusammengefaßt und verlaufen horizontal über die gesamte Breite jedes Wandteils 101-104. Wie aus Fig. 7 besonders deutlich hervorgeht, erstrecken sich die seitlichen Stützrippen 120 bis zu dem zentralen Kopplungsorgan 113 des Verbindungselements, und die Stützrippen 120 sind mit dem Organ 113 fest verbunden, um dessen Stabilität zu erhöhen. Zudem bilden die Stützrippen 120 einen Stoßschutz für die Organe 113, weil sie dieselbe Erstreckungstiefe aufweisen wie das Organ 113.

Zwischen den paarweise über die gesamte Höhe der Wandteile 101 bis 104 vorgesehenen außengelegenen Stützrippen 120 sind jeweils Bohrungen 130 ausgebildet, die es erlauben, mehrere Behälter des dargestellten Typs miteinander zu verbinden. Alternativ hierzu eignen sich die Bohrungen 130 zur Befestigung eines festen Bodenteils (nicht dargestellt) oder/und eines festen Deckelteils (ebenfalls nicht dargestellt) und/oder fester Zwischenböden.

Der Deckel 105 des Behälters in den Fig. 5 und 6 ist ebenfalls wie der Deckel 5 des Behälters in den Fig. 1 und 2 zweiteilig ausgebildet. Im Gegensatz zu dem vorstehend beschriebenen zweiteiligen Schiebedeckel ist der aus den Fig. 5 und 6 ersichtliche zweiteilige Deckel 105 als Klappdeckel ausgebildet.

Wenn, wie in Fig. 5 dargestellt, beide Deckelteile 140 und 141 des Klappdeckels 105 geschlossen sind, also auf dem Behälteroberrand beispielsweise klemmend sitzen, steht der Deckel 105 ringsum mit einem vorgegebenen Betrag über die Behälteroberseite über, und die Verbindungsorgane 142-145 der beiden Deckelteile bzw. Deckelhälften 140, 141 befinden sich in gegenseitiger Eingriffsstellung, durch welche der Deckel im Bereich seiner Scharnierorgane dicht, vor allem flüssigkeitsdicht ist, so daß Regenwasser nicht in den Behälter einzudringen vermag.

Wie aus Fig. 6 hervorgeht, in der die beiden Deckelteile 140 und 141 vom Behälter abgenommen und voneinander entrastet sind, bestehen die Scharnierorgane aus miteinander zusammenwirkenden Rinnen, wobei jeweils ein Paar von Rinnen 140, 141 bzw. 142, 143 an jedem Deckelteil 140, 141 integral mit diesem ausgebildet ist. Bei den beiden Rinnen eines Rinnenpaares handelt es sich jeweils um übergreifende sowie untergreifende Rinnen, die mit den entsprechenden Rinnen des anderen Deckelteils in Eingriff zu gelangen vermögen, wodurch sich aufgrund der gekrümmten Ausbildung der Rinnen eine Scharnierverbindung ergibt, aufgrund welcher der Deckel 105 aufklappbar ist, und zwar alternativ entweder durch Aufschwenken des Deckelteils 140 oder des Deckelteils 141 bei auf dem Behälter aufgesetztem Deckel 105.

## Patentansprüche

1. Komposter mit vier gleich ausgebildeten Wandteilen (1 bis 4) und vorzugsweise einem Deckel (5), wobei der Komposter einen etwa rechteckigen Grundriß mit vier ebenen Seitenwandbereichen und vier Eckbereichen hat, und die Wandteile (1 bis 4) zwei vertikale Seitenkanten aufweisen, an denen Verbindungselemente (10, 11) angeordnet sind, die mit den Wandteilen (1 bis 4) einstückig ausgebildet sind, wobei eine Seitenkante jedes Wandteils (1 bis 4) in der Wandteilebene liegt und die andere Seitenkante sich am Ende eines Wandteilabschnitts befindet, der zur Bildung eines Eckbereichs abgebogen ist.

2. Komposter mit vier gleich ausgebildeten Wandteilen (101 bis 104) und vorzugsweise einem Deckel (105), wobei der Komposter einen etwa rechteckigen Grundriß mit vier ebenen Seitenwandbereichen und vier Eckbereichen hat, und die Wandteile (101 bis 104) zwei vertikale Seitenkanten aufweisen, an denen Vebindungselemente (110, 111) angeordnet sind, die mit den Wandteilen (101 bis 104) einstückig ausgebildet sind, wobei jedes Wandteil (110, 111) an seinen beiden Seitenkantenbereichen (106, 107) zur Bildung abgeschrägter, vertikaler Behälter-Eckbereiche abgewinkelt ist.

3. Komposter nach Anspruch 1 oder 2,
dadurch **gekennzeichnet,**
daß die Verbindungselemente (10, 11, 110, 111) derart ausgelegt sind, daß die Wandteile (1-4, 101-104) vertikal zusammenschiebbar sind.

4. Komposter nach Anspruch 1, 2 oder 3,
dadurch **gekennzeichnet,**
daß die Verbindungselemente zwei unterschiedlich ausgebildete Kopplungsorgane (10 und 11, 110 und 111) umfassen, wobei eine Kopplungsorgansorte an einer Wandteilseitenkante und die andere Kopplungsorgansorte an der anderen Wandteilseitenkante ausgebildet ist.

5. Komposter nach Anspruch 4,
dadurch **gekennzeichnet,**
daß das eine Kopplungsorgan als vertikal verlaufender Stab (10, 110) und das andere Kopplungsorgan (11, 111) als mehrere Stabführungsteile (12, 13, 112, 113) ausgebildet ist.

6. Komposter nach Anspruch 5,
dadurch **gekennzeichnet,**
daß die Stabführungsteile (12, 13, 112, 113) den Stab (10, 110) über einen vorgegebenen Umfangsbereich umgreifende Abschnitte (12,112) und diesen gegenüberliegende Stützabschnitte (13, 113) umfassen.

7. Komposter nach Anspruch 6,
dadurch **gekennzeichnet,**
daß die Stabführungsabschnitte (12, 13, 112, 113) im Querschnitt bzw. in Aufsicht in etwa U-förmig ausgebildet sind, wobei einer der beiden U-Schenkel den Stützabschnitt (13, 113) und der andere U-Schenkel den Umgreifungsabschnitt (12, 113) bildet, wozu dieser Schenkel (12, 112) am freien Ende in Richtung auf den Stützabschnitt-U-Schenkel (13, 113) umgebogen ist.

8. Komposter nach Anspruch 7,
dadurch **gekennzeichnet,**
daß der lichte Abstand der beiden U-Schenkel (12, 13, 112, 113) im wesentlichen der Stärke des stabförmigen Kopplungsorgans (10, 110) in dieser Richtung entspricht, und daß der Abstand von der innenliegenden Fläche der U-Basis (14, 114) zur Innenseite des umgebogenen U-Schenkelabschnitts (15, 115) des Umgreifungsabschnitts (12, 112) größer ist als die Stärke des stabförmigen Kopplungsorgans (10, 110) in dieser Richtung.

9. Komposter nach einem der Ansprüche 5 bis 8,
dadurch **gekennzeichnet,**
daß sich der umgebogene U-Schenkelabschnitt (15, 115) im wesentlichen bis in die Nähe des Übergangsbereichs des stabförmigen Kopplungsorgans (11, 111) des benachbarten Wandteils zu diesem erstreckt, ohne diesen zu berühren.

10. Komposter nach einem der Ansprüche 5 bis 9,
dadurch **gekennzeichnet,**
daß das stabförmige Kopplungsteil (10, 110) einen runden, im wesentlichen kreisförmigen Querschnitt aufweist oder flach, mit einem in wesentlichen rechteckigen Querschnitt ausgebildet ist.

11. Komposter nach einem der Ansprüche 5 bis 10,
dadurch **gekennzeichnet,**
daß sich das stabförmige Kopplungsorgan (10, 110) im wesentlichen über die gesamte Höhe des Wandteils (1-4, 101-104) bzw. über die gesamte Länge seiner entsprechenden Seitenkante erstreckt.

12. Komposter nach Anspruch 11,
dadurch **gekennzeichnet,**
daß der Stützabschnitt (13, 113) und der Umgreifungsabschnitt (12, 112) des Stabführungsteils (11, 111) an in Wandteil-Seitenkantenlängsrichtung aufeinanderfolgenden Abschnitten jeweils ohne Gegenstück ausgebildet sind.

13. Komposter nach Anspruch 12,
dadurch **gekennzeichnet,**
daß ein zentraler Umgreifungsabschnitt (12, 112) und zwei außenliegende Stützabschnitte (13, 113) vorgesehen sind.

14. Komposter nach Anspruch 12 oder 13,
dadurch **gekennzeichnet,**
daß die Gesamtlänge von Umgreifungs- und Stützabschnitten (12, 13, 112, 113) jeweils in etwa gleich ist.

15. Komposter nach einem der Ansprüche 5 bis 14,
dadurch **gekennzeichnet,**
daß der Stabführungsteil (11) an der Wandteil-Seitenkante ausgebildet ist, die im wesentlichen in der Wandteilebene liegt.

16. Komposter nach Anspruch 15,
dadurch **gekennzeichnet,**
daß das stabförmige Kopplungsorgan (11) an der abgebogenen Wandteilseitenkante (7) ausgebildet ist.

17. Komposter nach einem der Ansprüche 5 bis 14,
dadurch **gekennzeichnet,**
daß die Umgreifungsabschnitte (12) des Stabführungsteils (11) an der Wandteilaußenseite ausgebildet sind.

18. Komposter nach einem der Ansprüche 5 bis 14,
dadurch **gekennzeichnet,**
daß die Umgreifungsabschnitte (112) des Stabführungsteils (111) an der Wandteilinnenseite ausgebildet sind.

19. Komposter nach einem der Ansprüche 4 bis 18,
dadurch **gekennzeichnet,**
daß die Wandteile (1-4, 101, 104) Verstärkungsrippen (20, 21, 120, 121) aufweisen.

20. Komposter nach Anspruch 19,
dadurch **gekennzeichnet,**
daß Verstärkungsrippen (20, 120) an der Wandteilaußenseite im wesentlichen horizontal verlaufen, mit dem Umgreifungsabschnitt (13, 112) vereinigt und vorzugsweise paarweise zusammengefaßt sind.

21. Komposter nach Anspruch 19 oder 20,
dadurch **gekennzeichnet,**
daß Verstärkungsrippen (21, 121) an der Wandteilinnenseite vertikal verlaufen.

22. Komposter nach einem der Ansprüche 1 bis 21,
dadurch **gekennzeichnet,**
daß im Boden- und/oder Deckenbereich und/oder einem Zwischenbereich der Wandteile (1-4, 101-104) Befestigungseinrichtungen (30, 31, 130) für ein Bodenteil und/oder den Deckel und/oder einen Zwischenboden vorgesehen sind.

23. Komposter nach einem der Ansprüche 1 bis 22,
dadurch **gekennzeichnet,**
daß der Deckel (5) als Schiebedeckel ausgebildet ist.

24. Komposter nach Anspruch 23,
dadurch **gekennzeichnet,**
daß der Deckel (5) zweiteilig (40, 41) ausgebildet ist, daß ein Deckelteil (41) fest mit dem Behälter verbindbar ist, und daß der andere Deckelteil (40) verschiebbar gegenüber dem erstgenannten Deckelteil (41) an diesem sowie am Behälter gelagert ist.

25. Komposter nach Anspruch 24,
dadurch **gekennzeichnet,**
daß der verschiebbare Deckelteil (40) im aufgeschobenen Zustand den feststehenden Deckelteil (41) übergreift.

26. Komposter nach Anspruch 24 oder 25,
dadurch **gekennzeichnet,**
daß die beiden Deckelteile (40, 41) im wesentlichen gleich groß sind.

27. Komposter nach einem der Ansprüche 24 bis 26,
dadurch **gekennzeichnet,**
daß die Deckelteile (40, 41) nach unten weisenden Stege (42, 43) umfassen, mit denen sie die horizontalen Kanten der Wandteile übergreifen.

28. Komposter nach einem der Ansprüche 24 bis 27,
dadurch **gekennzeichnet,**
daß die beiden Deckelteile (40, 41) im wesentlichen horizontal verlaufende Ränder umfassen, welche über die Wandteile (1-4) hinausstehen.

29. Komposter nach einem der Ansprüche 23 bis 28,
dadurch **gekennzeichnet,**
daß der Deckel (5) bzw. die Deckelteile (40, 41) ein Formteil ist bzw. Formteile sind, die Schrägflächen in Art eines Daches aufweisen.

30. Komposter nach einem der Ansprüche 1 bis 22,
dadurch **gekennzeichnet,**
daß der Deckel (105) zweiteilig ausgebildet ist, und daß die beiden Deckelteile (140, 141) relativ zueinander verschwenkbar sowie lösbar, vor allem im Klemmsitz mit dem Behälteroberrand verbindbar sind.

31. Komposter nach Anspruch 30,
dadurch **gekennzeichnet,**
daß die beiden Deckelteile (140, 141) lösbar miteinander verbunden sind.

32. Komposter nach Anspruch 31,
dadurch **gekennzeichnet,**
daß die beiden Deckelteile (140, 141) über lösbare Scharnierorgane miteinander verbunden sind, die jeweils einstückig mit dem jeweiligen Deckelteil ausgebildet sind.

33. Komposter nach Anspruch 32,
dadurch **gekennzeichnet,**
daß die Scharnierorgane als komplementär zusammenwirkende, ineinandergreifende Rinnen (142-145) ausgebildet sind, und daß jedes Deckelteil (140, 141) entlang der Deckelteil-Schwenkachse nebeneinanderliegende, entsprechende Rinnen (142, 143) des anderen Deckelteils übergreifende bzw. untergreifende Rinnen (144, 145) umfaßt.

34. Komposter nach einem der Ansprüche 1 bis 31,
dadurch **gekennzeichnet,**
daß seine Elemente aus Kunststoff bestehen.

35. Komposter nach Anspruch 34,
dadurch **gekennzeichnet,**
daß es sich bei den Behälterelementen um Kunststoffspritzgußteile handelt.

## Claims

1. Compost container with four wall parts (1 to 4) of the same design and preferably a lid (5), the compost container having an approximately rectangular plan with four plane side-wall regions and four corner regions, and the wall parts (1 to 4) having two vertical lateral edges on which are arranged connecting elements (10, 11) which are designed in one piece with the wall parts (1 to 4), one lateral edge of each wall part (1 to 4) lying in the plane of the wall part and the other lateral edge being situated at the end of a portion of the wall part which is bent to form a corner region.

2. Compost container with four wall parts (101 to 104) of the same design and preferably a lid (105), the compost container having an approximately rectangular plan with four plane side-wall regions and four corner regions, and the wall parts (101 to 104) having two vertical lateral edges on which are arranged connecting elements (110, 111) which are designed in one piece with the wall parts (101 to 104), each wall part (101 to 104) being angled at its two lateral-edge regions (106, 107) to form bevelled, vertical container corner regions.

3. Compost container according to Claim 1 or 2, characterised in that the connecting elements (10, 11, 110, 111) are designed in such a way that the wall parts (1-4, 101-104) can be vertically slid together.

4. Compost container according to Claim 1, 2 or 3, characterised in that the connecting elements comprise two coupling members (10 and 11, 110 and 111) of different design, one kind of coupling member being constructed on one lateral edge of the wall part and the other kind of coupling member being constructed on the other lateral edge of the wall part.

5. Compost container according to Claim 4, characterised in that one coupling member is designed as a vertically running bar (10, 110) and the other coupling member (11, 111) is designed as a plurality of bar-guiding parts (12, 13, 112, 113).

6. Compost container according to Claim 5, characterised in that the bar-guiding parts (12, 13, 112, 113) comprise portions (12, 112) which embrace the bar (10, 110) over a preset circumferential region and supporting portions (13, 113) located opposite these portions.

7. Compost container according to Claim 6, characterised in that the bar-guiding portions (12, 13, 112, 113) are designed approximately U-shaped in cross-section or in plan, one of the two arms of the U forming the supporting portion (13, 113) and the other arm of the U forming the embracing portion (12, 112), for which purpose this arm (12, 112) is bent round at the free end towards the arm (13, 113) of the U forming the supporting portion.

8. Compost container according to Claim 7, characterised in that the clear distance between the two arms (12, 13, 112, 113) of the U corresponds substantially to the thickness of the bar-shaped coupling member (10, 110) in this direction, and in that the distance from the inner surface of the base (14, 114) of the U to the inside of the bent-round U-arm portion (15, 115) of the embracing portion (12, 112) is greater than the thickness of the bar-shaped coupling member (10, 110) in this direction.

9. Compost container according to one of Claims 5 to 8, characterised in that the bent-round U-arm portion (15, 115) extends substantially into the vicinity of the transition region of the bar-shaped coupling member (10, 110) of the adjacent wall part to the latter, without touching it.

10. Compost container according to one of Claims 5 to 9, characterised in that the bar-shaped coupling part (10, 110) has a round, substantially circular cross-section or is designed flat, with a substantially rectangular cross-section.

11. Compost container according to one of Claims 5 to 10, characterised in that the bar-shaped coupling member (10, 110) extends substantially over the total height of the wall part (1-4, 101-104), or rather over the total length of its corresponding lateral edge.

12. Compost container according to Claim 11, characterised in that the supporting portion (13, 113) and the embracing portion (12, 112) of the bar-guiding part (11, 111) are constructed, at portions following one another in the longitudinal direction of the lateral edge of the wall part, in each case without a counterpart.

13. Compost container according to Claim 11, characterised in that one central embracing portion (12, 112) and two outer supporting portions (13, 113) are provided.

14. Compost container according to Claim 12 or 13, characterised in that the total length of embracing and supporting portions (12, 13, 112, 113) is in each case approximately equal.

15. Compost container according to one of Claims 5 to 14, characterised in that the bar-guiding part (11) is constructed on that lateral edge of the wall part lying substantially in the plane of the wall part.

16. Compost container according to Claim 15, characterised in that the bar-shaped coupling member (10) is constructed on the bent lateral edge (7) of the wall part.

17. Compost container according to one of Claims 5 to 14, characterised in that the embracing portions (12) of the bar-guiding part (11) are constructed on the outside of the wall part.

18. Compost container according to one of Claims 5 to 14, characterised in that the embracing portions (112) of the bar-guiding part (111) are constructed on the inside of the wall part.

19. Compost container according to one of Claims 4 to 18, characterised in that the wall parts (1-4, 101-104) have reinforcing ribs (20, 21, 120, 121).

20. Compost container according to Claim 19, characterised in that reinforcing ribs (20, 120) run substantially horizontally on the outside of the wall part, are joined to the embracing portion (12, 112) and are preferably combined in pairs.

21. Compost container according to Claim 19 or 20, characterised in that reinforcing ribs (21, 121) run vertically on the inside of the wall part.

22. Compost container according to one of Claims 1 to 21, characterised in that fastening means (30, 31, 130) are provided in the base region and/or lid region and/or an intermediate region of the wall parts (1-4, 101-104) for a base part and/or the lid and/or an intermediate floor.

23. Compost container according to one of Claims 1 to 22, characterised in that the lid (5) is designed as a sliding lid.

24. Compost container according to Claim 23, characterised in that the lid (5) is designed in two parts (40, 41), in that one lid part (41) can be fixedly connected to the container, and in that the other lid part (40) is mounted slidably relative to the first-mentioned lid part (41) on the latter and on the container.

25. Compost container according to Claim 24, characterised in that the slidable lid part (40) covers the fixed lid part (41) in the slid-open state.

26. Compost container according to Claim 24 or 25, characterised in that the two lid parts (40, 41) are of substantially the same size.

27. Compost container according to one of Claims 24 to 26, characterised in that the lid parts (40, 41) comprise downward-pointing webs (42, 43), with which they lap over the horizontal edges of the wall parts.

28. Compost container according to one of Claims 24 to 27, characterised in that the two lid parts (40, 41) comprise substantially horizontally running borders which project beyond the wall parts (1-4).

29. Compost container according to one of Claims 23 to 28, characterised in that the lid (5) or the lid parts (40, 41) is a moulding or are mouldings which have sloping surfaces in the manner of a roof.

30. Compost container according to one of Claims 1 to 22, characterised in that the lid (105) is designed in two parts, and in that the two lid parts (140, 141) are pivotable relative to each other and detachably connectable, especially with a press fit, to the upper edge of the container.

31. Compost container according to Claim 30, characterised in that the two lid parts (140, 141) are detachably interconnected.

32. Compost container according to Claim 31, characterised in that the two lid parts (140, 141) are interconnected via detachable hinge members which are designed in each case in one piece with the respective lid part.

33. Compost container according to Claim 32, characterised in that the hinge members are designed as complementarily cooperating, interlocking grooves (142-145), and in that each lid part (140, 141) comprises grooves (144, 145) lying side by side along the pivot axis of the lid part and engaging respectively over and under corresponding grooves (142, 143) of the other lid part.

34. Compost container according to one of Claims 1 to 31, characterised in that its elements consist of plastic.

35. Compost container according to Claim 34, characterised in that the container elements are plastic injection-moulded parts.

## Revendications

1. Récipient de compostage comprenant quatre éléments de paroi (1 à 4) de formes égales et ayant de préférence un couvercle (5), le récipient de compostage ayant une projection horizontale à peu près rectangulaire avec quatre zones de paroi latérale planes et quatre zones de coin, et les éléments de paroi (1 à 4) ayant deux arêtes latérales verticales auxquelles des éléments de connexion (10 et 11) sont arrangés, qui font partie intégrale avec les éléments de paroi (1 à 4), une arête latérale de chaque élément de paroi (1 à 4) se trouvant dans le plan de l'élément de paroi et l'autre arête latérale se trouvant à la fin d'une section d'élément de paroi, qui est courbée pour former une zone de coin.

2. Récipient de compostage comprenant quatre éléments de paroi (101 à 104) de formes égales et ayant de préférence un couvercle (105), le récipient de compostage ayant une projection horizontale à peu près rectangulaire avec quatre zones de paroi latérale planes et quatre zones de coin, et les éléments de paroi (101 à 104) ayant deux arêtes latérales verticales auxquelles des éléments de connexion (110 et 111) sont arrangés, qui font partie intégrale avec les éléments de paroi (101 à 104), chaque élément de paroi (110,111) étant plié en U dans ses deux zones d'arêtes latérales (106,107) pour former des parties de coin de récipient verticales et biseautées.

3. Récipient de compostage selon la revendication 1 ou 2, caractérisé en ce que les éléments de connexion (10,11,110,111) sont conçus tels que les éléments de paroi (1-4,101-104) peuvent être assemblés par emboîtement coulissant vertical.

4. Récipient de compostage selon la revendication 1, 2 ou 3, caractérisé en ce que les éléments de connexion comprennent deux organes d'accouplement (10 et 11, 110 et 111) de formes différentes, une sorte d'organe d'accouplement étant formée à une arête latérale d'élément de paroi et l'autre sorte d'organe d'accouplement étant formée à l'autre arête latérale d'élément de paroi.

5. Récipient de compostage selon la revendication 4, caractérisé en ce que un élément d'accouplement a la forme d'une tige (10,110) s'étendant verticalement et l'autre organe d'accouplement (11,111) a la forme de plusieurs éléments de guidage de tige (12,13,112,113).

6. Récipient de compostage selon la revendication 5, caractérisé en ce que les éléments de guidage de tige (12,13,112,113) sont formés par des sections (12,112) embrassant la tige (10,110) le long de zones circonférentielles prédéterminées et des sections de support (13,113) opposées auxdites premières sections.

7. Récipient de compostage selon la revendication 6, caractérisé en ce que les éléments de guidage de tige (12,13,112,113) ont une section ou une projection à peu près en forme de U, une des deux branches de l'U formant la section d'appui (13,113) et l'autre branche de l'U formant la section d'embrassement (12,112), cette branche (12,112) étant courbée à son extrémité libre en direction de la branche (13,113) de l'U de la section d'appui.

8. Récipient de compostage selon la revendication 7, caractérisé en ce que l'écartement entre les deux branches (12,13,112,113) correspond essentiellement à l'épaisseur de l'élément d'accouplement (10,110) en forme de tige dans cette direction et que la distance de la surface intérieure de la base en U (14,114) jusqu'au côté intérieur de la section de branche (15,115) repliée de la section d'embrassement (12,112) est plus grande que l'épaisseur de l'organe d'accouplement (10,110) en forme de tige dans cette direction.

9. Récipient de compostage selon une des revendications 5 à 8, caractérisé en ce que la section de branche (15,115) pliée s'étend essentiellement jusqu'à proximité de la zone de transition de l'organe d'accouplement (11,111) en forme de tige de l'élément de paroi adjacent sans le toucher.

10. Récipient de compostage selon une des revendications 5 à 9, caractérisé en ce que l'élément d'accouplement (10,110) en forme de tige a une section ronde, essentiellement circulaire, ou a une forme plate avec une section essentiellement rectangulaire.

11. Récipient de compostage selon une des revendications 5 à 10, caractérisé en ce que l'élément d'accouplement (10,110) en forme de tige s'étend essentiellement le long de la hauteur totale de l'élément de paroi (1 à 4, 101 à 104) ou la longueur totale de son arête latérale correspondante, respectivement.

12. Récipient de compostage selon la revendication 11, caractérisé en ce que la section d'appui (13,113) et la section d'embrassement (12,112) de l'élément de guidage de tige (11,111) sont formées dans des sections consécutives en direction longitudinale des arêtes latérales d'élément de paroi, les sections n'ayant pas de contreparties.

13. Récipient de compostage selon la revendication 12, caractérisé en ce qu'une section d'embrassement centrale (12,112) et deux sections d'appui extérieures (13,113) sont prévues.

14. Récipient de compostage selon la revendication 12 ou 13, caractérisé en ce que la longueur totale des sections d'embrassement et d'appui (12,13,112,113) sont chaque fois égales.

15. Récipient de compostage selon une des revendications 5 à 14, caractérisé en ce que l'élément de guidage de tige (11) est formé à l'arête latérale de l'élément de paroi, qui se trouve essentiellement dans le plan de l'élément de paroi.

16. Récipient de compostage selon la revendication 15, caractérisé en ce que l'organe d'accouplement en forme de tige (11) est formé à l'arête latérale de l'élément de paroi (7) plié.

17. Récipient de compostage selon une des revendications 5 à 14, caractérisé en ce que les sections d'embrassement (12) des éléments de guidage de tige (11) sont formés sur le côté extérieur de l'élément de paroi.

18. Récipient de compostage selon une des revendications 5 à 14, caractérisé en ce que les sections d'embrassement (112) de l'élément de guidage de tige (111) sont formées sur le côté intérieur de l'élément de paroi.

19. Récipient de compostage selon une des revendications 4 à 18, caractérisé en ce que les éléments de paroi (1-4,101-104) sont pourvus de nervures de renforcement (20,21,120,121).

20. Récipient de compostage selon la revendication 19, caractérisé en ce que des nervures de renforcement (20,120) s'étendant essentiellement horizontalement sur le côté extérieur de l'élément de paroi, sont unies à la section d'embrassement (12,112) et sont réunies de préférence par paire.

21. Récipient de compostage selon la revendication 19 ou 20, caractérisé en ce que des nervures de renforcement (21,121) s'étendent verticalement sur le côté intérieur de l'élément de paroi.

22. Récipient de compostage selon une des revendications 1 à 21, caractérisé en ce que dans la zone de fond et/ou supérieure et/ou une zone intermédiaire des éléments de paroi (1-4,101-104) des moyens de fixation (30,31,130) sont prévus pour un élément de fond et/ou un couvercle et/ou un fond intermédiaire.

23. Récipient de compostage selon une des revendications 1 à 22, caractérisé en ce que le couvercle (15) est conçu comme couvercle coulissant.

24. Récipient de compostage selon la revendication 23, caractérisé en ce que le couvercle (5) est formé en deux parties (40,41), que la partie de couvercle (41) peut être connectée de façon solide au récipient et que l'autre partie de couvercle (40) est fixée à la première partie de couvercle (41), ainsi qu'au récipient de façon à pouvoir coulisser par rapport à la première partie de couvercle (41).

25. Récipient de compostage selon la revendication 24, caractérisé en ce que la partie de couvercle coulissante (40) s'étend au-dessus de la partie de couvercle fixe (41) à l'état ouvert.

26. Récipient de compostage selon la revendication 24 ou 25, caractérisé en ce que les deux parties de couvercle (40,41) ont essentiellement la même grandeur.

27. Récipient de compostage selon une des revendications 24 à 26, caractérisé en ce que les éléments de couvercle (40,41) ont des traverses (42,43) s'étendant vers le bas, qui s'étendent au-delà des arêtes horizontales des éléments de paroi.

28. Récipient de compostage selon une des revendications 24 à 27, caractérisé en ce que les deux parties de couvercle (40,41) ont des bords s'étendant essentiellement horizontalement et qui s'étendent au-delà des éléments de paroi (1-4).

29. Récipient de compostage selon une des revendications 23 à 28, caractérisé en ce que le couvercle ou les parties de couvercle (40,41), respectivement, a une partie préformée ou ont des parties préformées, respectivement, qui ont des surfaces inclinées en forme d'un toit.

30. Récipient de compostage selon une des revendications 1 à 22, caractérisé en ce que le couvercle (105) est formé avec deux pièces et que les deux pièces de couvercle (140,141) peuvent être basculées l'une par rapport à l'autre et peuvent être désassemblées et peuvent être connectées avant tout au bord supérieur du récipient au moyen d'un ajustement pressé.

31. Récipient de compostage selon la revendication 30, caractérisé en ce que les deux parties de couvercle (140,141) sont connectées de façon amovible l'une à l'autre.

32. Récipient de compostage selon la revendication 31, caractérisé en ce que les deux parties de couvercle (140,141) sont connectées l'une à l'autre au moyen d'organes de charnières détachables, qui sont formés chacune avec la partie de couvercle correspondante sous forme de pièce unique.

33. Récipient de compostage selon la revendication 32, caractérisé en ce que les organes de charnières sont conçus comme rigoles (142-145) s'engrenant et coopérant de façon complémentaire et que chaque partie de couvercle (140,141) comprend le long de l'axe de pivotement de la partie de couvercle des rigoles (144,145) adjacentes, recouvrantes, supérieures ou inférieures, respectivement, s'engrenant dans des rigoles correspondantes (142,143) de l'autre partie de couvercle.

34. Récipient de compostage selon une des revendications 1 à 31, caractérisé en ce que ses éléments sont en matière synthétique.

35. Récipient de compostage selon la revendication 34, caractérisé en ce que les éléments de récipient sont des éléments en matière synthétique moulés par injection.
